(19) Europäisches Patentamt
European Patent Office
Office européen des brevets

(11) EP 2 687 698 B1

(12) **FASCICULE DE BREVET EUROPEEN**

(45) Date de publication et mention
de la délivrance du brevet:
**25.05.2016 Bulletin 2016/21**

(51) Int Cl.:
***F01N 11/00*** *(2006.01)*        ***F01N 3/20*** *(2006.01)*

(21) Numéro de dépôt: **13305775.2**

(22) Date de dépôt: **10.06.2013**

(54) **Procédé de détection de composés azotés contenus dans des gaz d'échappement, notamment de moteur à combustion interne.**

Verfahren zur Detektion von Stickstoffverbindungen in Abgasen, insbesondere in einem Verbrennungsmotor

Method for detection of nitrogen compounds contained in exhaust gases, especially internal combustion engine.

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.07.2012 FR 1202027**

(43) Date de publication de la demande:
**22.01.2014 Bulletin 2014/04**

(73) Titulaire: **IFP Énergies nouvelles**
**92852 Rueil-Malmaison Cedex (FR)**

(72) Inventeur: **Frobert, Arnaud**
**69540 Irigny (FR)**

(56) Documents cités:
**EP-A1- 2 226 480        WO-A1-2011/093771**
**WO-A2-2009/135016      US-A1- 2004 098 974**

EP 2 687 698 B1

**Description**

La présente invention se rapporte à un procédé de détection de composés azotés contenus dans des gaz d'échappement.

Elle s'applique plus particulièrement mais non exclusivement à des gaz d'échappement circulant dans la ligne d'échappement d'un moteur à combustion et en particulier d'un moteur à combustion interne.

Le groupe de mots "gaz d'échappement" couvre, non seulement le résultat de la combustion d'un mélange carburé dans un moteur à combustion interne, stationnaire ou installé sur un véhicule automobile, mais aussi tout autre type de résultat de combustion, comme les fumées provenant d'une turbine ou d'un four et circulant dans une cheminée.

De manière générale, l'inflammation d'un combustible, tel qu'un carburant, a pour conséquence de créer, dans des conditions de températures élevées et de forte teneur en oxygène, des gaz comme le monoxyde d'azote (NO), le dioxyde d'azote ($NO_2$), qui sont plus connus sous le vocable de NOx (pour oxydes d'azotes).

Ces NOx sont ensuite rejetés dans l'atmosphère et présentent un danger, d'une part, pour la santé des personnes et, d'autre part, pour l'environnement puisqu'ils contribuent à la formation de brouillards polluants susceptibles de s'attaquer à la couche d'ozone troposphérique.

En conséquence, il est nécessaire de prévoir des moyens pour éviter l'émission de ces NOx dans l'atmosphère, par exemple en les détruisant après leur formation.

Pour détruire les NOx, il est connu de réaliser une opération de traitement chimique, comme une réduction catalytique sélective, dite SCR (Selective Catalytic Réduction). Voir par exemple le document WO 2009/135016 A2.

Cette opération consiste à réduire de manière sélective les NOx par un agent réducteur sur un catalyseur dédié. La réduction est dite sélective car l'agent réducteur réduit les NOx et non l'oxygène présent dans le mélange à brûler.

Cet agent réducteur, en particulier pour une utilisation avec un moteur à combustion interne d'un véhicule automobile, est soit de l'ammoniac (ou une matière pouvant se décomposer en de l'ammoniac), soit un hydrocarbure oxygéné ou non, soit un mélangé d'hydrocarbures pouvant contenir en partie ou en totalité un ou plusieurs hydrocarbures oxygénés.

Dans le cas d'un traitement des gaz d'échappement avec une SCR par l'ammoniac, l'agent ammoniacal utilisé est stocké soit sous forme de complexes solides, soit sous forme de précurseur liquide, comme de l'urée en solution aqueuse.

Dans le cas de précurseur liquide sous forme d'urée, celle-ci est injectée dans le flux des gaz d'échappement en amont du catalyseur. Suite à cette injection, l'eau contenue dans l'urée est évaporée sous l'effet de la chaleur des gaz et l'urée se décompose en ammoniac et en acide isocyanique.

Pour le traitement avec une SCR par des hydrocarbures, oxygénés ou non, ceux-ci sont injectés à l'échappement ou issus de la combustion, par exemple par une post injection tardive, et réagissent avec les NOx contenus dans les gaz d'échappement. Lors de cette réaction, il se forme des complexes contenant C, H, N et O, qui sont instables et qui se décomposent idéalement en dioxyde de carbone, eau et diazote.

Toutefois, il en résulte également de nombreux autres composés, comme du cyanure d'hydrogène qui peut être présent en quantités non négligeables, comme par exemple dans le cas d'un traitement avec une SCR par l'éthanol.

Comme cela est bien connu, il a été mis en place des dispositifs permettant de gérer l'injection d'agent réducteur de façon à assurer une injection suffisante pour reduire correctement les NOx.

Dans ce type de dispositif, un capteur de gaz notamment sensible aux oxydes d'azote, plus connu sous le vocable de sonde à NOx, est placé en sortie du catalyseur et permet de mesurer les quantités de gaz émis.

Le signal de sortie de ce capteur est envoyé à une unité de calcul qui est chargée de contrôler et/ou diagnostiquer la fonction d'injection de l'agent réducteur et/ou la fonction catalytique. A partir de ce signal, l'unité de calcul détermine la quantité de NOx contenue dans les gaz d'échappement à la sortie du catalyseur et cette quantité est ensuite comparée à un modèle prédéterminé. En cas d'écart par rapport à ce modèle, la consigne d'injection d'agent réducteur est modifiée pour réduire voire annuler cet écart.

Ce dispositif bien que donnant satisfaction présente néammoins des inconvénients non négligeables.

En effet, ce dispositif ne permet pas de détecter la présence d'autres composés, comme l'acide isocyanique ou le cyanure d'hydrogène.

Par cela l'unité de calcul ne peut pas être informée de la présence de ces composés dans les gaz d'échappement traités en sortie du catalyseur et ces composés sont rejetés en tant que tels dans l'atmosphère en pouvant être nuisibles aux êtres vivants.

La présente invention se propose de remédier aux inconvénients mentionnés ci-dessus d'une façon simple et peu coûteuse tout en utilisant les dispositifs déja présents sur la ligne d'échappement ou la cheminée.

A cet effet, la présente invention concerne un procédé de détection d'émissions de composés azotés dans des gaz d'échappement traités avec une réduction catalytique sélective réalisée par l'introduction d'un agent réducteur dans les gaz et par passage de ces gaz au travers d'un catalyseur, caractérisé en ce que le procédé consiste à :

- envoyer à une unité de calcul le signal collecté par un capteur de gaz (18) placé dans les gaz d'échappement en aval du catalyseur et représentatif de la quantité de NOx ($NOx_{sonde}$) en sortie du catalyseur,
- à décomposer ce signal en une valeur représentative de la quantité de NOx effectifs ($NOx_{réel}$) en sortie du catalyseur établie par le modèle du catalyseur SCR, en un coefficient de perturbation (k) du capteur et en une valeur représentative de la quantité d'ammoniac ($NH_{3réel}$) via un modèle intégré pour obtenir $NOx_{sonde} = NOx_{réel} + k.NH_{3réel}$,
- à évaluer le coefficient (k) à partir de cette décomposition,
- à déterminer la présence de composés azotés en aval du catalyseur lorsque le coefficient (k) est supérieur ou égal à 1.

Le procédé peut consister à introduire de l'ammoniac ou une matière se décomposant en ammoniac en tant qu'agent réducteur.

Le procédé peut consister à introduire de l'urée en tant qu'agent réducteur.

Le procédé peut consister à détecter la présence d'acide isocyanique dans les gaz d'échappement en aval du catalyseur lorsque le coefficient (k) est supérieur ou égal à 1 et lorsque l'agent réducteur est de l'ammoniac ou une matière se décomposant en ammoniac.

Le procédé peut consister à introduire un hydrocarbure en tant qu'agent réducteur.

Le procédé peut consister à introduire un hydrocarbure oxygéné en tant qu'agent réducteur.

Le procédé peut consister à introduire de l'éthanol en tant qu'agent réducteur.

Le procédé peut consister à détecter la présence d'acide isocyanique lorsque le coefficient (k) est supérieur ou égal à 1 et lorsque l'agent réducteur est un hydrocarbure.

Le procédé peut consister à lancer par l'unité une séquence d'alerte suite à la détection de ces composés azotés.

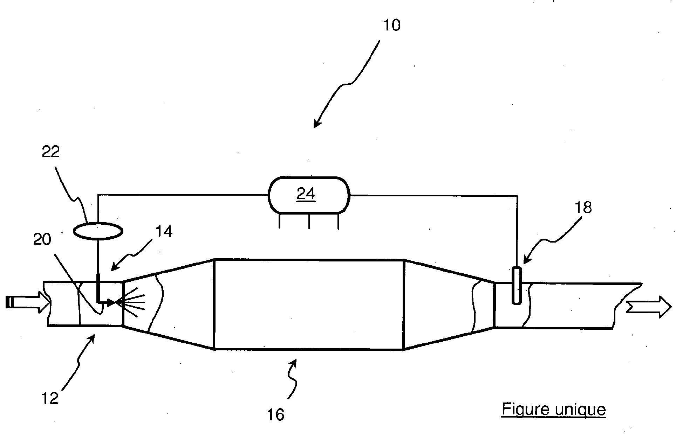

Les autres caractéristiques et avantages de l'invention vont apparaître maintenant à la lecture de la description qui va suivre, donnée à titre uniquement illustratif et non limitatif, et à laquelle est annexée la figure unique montrant un dispositif de traitement de NOx par SCR qui utilise la présente invention.

Cette figure unique illustre un dispositif de traitement de NOx par SCR 10 placé sur une ligne d'échappement 12. Dans cette ligne circulent des gaz d'échappement provenant d'un moteur à combustion interne (non représenté) qui peut être statique ou installé sur un véhicule automobile.

Ce dispositif comprend, dans le sens de circulation des gaz d'échappement entre une entrée E et une sortie S, des moyens d'injection 14 d'un agent réducteur, un catalyseur SCR 16 et un capteur de gaz sous la forme d'une sonde à NOx 18 placée en aval de ce catalyseur.

Bien entendu et cela sans sortir du cadre de l'invention, l'agent réducteur peut également provenir de la chambre de combustion du moteur lors d'une post-injection de carburant par exemple.

Dans le cas où l'agent réducteur n'est pas issu du la chambre de combustion du moteur, ces moyens d'injection comprennent un injecteur 20 relié à un circuit d'injection 22 qui comporte tous les éléments (réservoir, pompe, ...) pour réaliser une telle injection. Cet injecteur est placé sur la portion de la ligne d'échappement en amont du catalyseur SCR d'une façon telle que son nez débouche dans la ligne d'échappement pour pulvériser l'agent réducteur en direction de ce catalyseur.

Avantageusement, l'agent réducteur est de l'ammoniac ou une matière générant de l'ammoniac par décomposition, comme de l'urée, mais il peut être utilisé tout autre agent, comme un hydrocarbure, hydrogéné ou non.

Le dispositif comprend également une unité de calcul et de commande 24 du circuit d'injection 22 et qui est également raccordée à la sonde 18. Cette unité de calcul contient des tables avec un modèle du catalyseur SCR permettant de connaître la quantité d'agent réducteur à injecter pour obtenir le traitement adéquate des NOx dans le catalyseur ainsi qu'un modèle phénoménologique intégré pour la quantité d'ammoniac en sortie du catalyseur.

Ainsi, grâce à la sonde à NOx, cette unité 24 connaît à tout moment la quantité de NOx sortant du catalyseur et permet ainsi d'adapter la quantité d'agent réducteur à délivrer dans la ligne d'échappement afin d'obtenir l'efficacité désirée.

Bien entendu, cette unité est également raccordée à différents autres capteurs (non représentés), comme des capteurs de température de gaz d'échappement, et reçoit des informations sur le fonctionnement du moteur à combustion interne pour lui permettre de commander le circuit d'injection 22.

Lors d'une campagne d'essais sur le dispositif de la figure, le demandeur a mis à jour que la sonde à NOx est sensible à des composés azotés et notamment à l'acide isocyanique (HNCO) et au cyanure d'hydrogène (HCN).

A partir de cela, le demandeur a développé un procédé qui permet d'identifier ces composés azotés et de lancer des procédures d'informations ou d'alertes vers l'utilisateur.

Comme cela est connu pour un système de contrôle classique de traitement par SCR à l'ammoniac, on identifie l'écart d'émission de NOx à l'aide de la sonde à NOx en comparant le signal qu'envoie cette sonde avec une information de la quantité de NOx attendue en aval du catalyseur SCR. Cette quantité peut être notamment estimée par un modèle phénoménologique qui est stocké dans l'unité 24.

Comme cela est largement admis une sonde à NOx est conçue pour mesurer des NOx.

Cependant, elle peut être perturbée par une somme de composés $P_i$ qui perturbent tous la sonde selon un

coefficient $k_i$ avec

$$NOx_{sonde} = NOx_{réel} + \sum_i k_i . P_i$$

Parmi les composés qui peuvent perturber la sonde, le plus connu est l'ammoniac ($NH_3$). Les autres composés dont le pouvoir perturbateur a été constaté par le demandeur sont le HNCO (acide isocyanique) et le HCN (cyanure d'hydrogène).

Il est connu dans la littérature que la perturbation liée à l'ammoniac correspond à un coefficient de perturbation k inférieur à 1.

Or en conditions réelles, par exemple sur un véhicule, il peut être connu :

- le $NOx_{sonde}$ : quantité de NOx mesurée ou estimée par l'intermédiaire de la sonde22 ;
- le $NOx_{réel}$: quantité de NOx effectifs en sortie du catalyseur 16 établie par le modèle du catalyseur SCR via un modèle intégré à l'unité de contrôle du moteur ou une sonde non perturbée ou une mesure "baie d'analyse" de type laboratoire
- le $NH_{3réel}$ : quantité d'ammoniac via un modèle intégré à l'unité de contrôle du moteur ou une sonde non perturbée ou une mesure "baie d'analyse" de type laboratoire

A partir de cela; il est donc possible de calculer le coefficient k comme ci-après:

$$NOx_{sonde} = NOx_{réel} + k.NH_{3réel} \text{ donc } k = \frac{NOx_{sonde} - NOx_{réel}}{NH_{3réel}}$$

Si k<1, il peut être estimé qu'il y a une perturbation due à l'ammoniac.

Si k>1, l'ammoniac seul ne peut expliquer la perturbation de la sonde et il est admis qu'un composé azoté perturbateur est présent dans les gaz d'échappement.

Ainsi,

- dans le cas de traitement avec une SCR par de l'ammoniac (ou une matière pouvant se décomposer en de l'ammoniac), qu'il existe en sortie de catalyseur une quantité non négligeable d'acide isocyanique (HNCO),
- dans le cas de traitement avec une SCR par un hydrocarbure et en particulier par de l'éthanol, qu'il existe une quantité non négligeable de cyanure d'hydrogène (HCN).

Dans les deux cas, ces émissions polluantes peuvent indiquer un dysfonctionnement important lors du traitement des NOx par le catalyseur ou lors de la délivrance de l'agent réducteur.

En conséquence, l'unité de calcul lance une ou plusieurs séquences d'alerte pour informer l'utilisateur de la présence de composés azotés indésirables dans les gaz d'échappement traduisant un dysfonctionnement de la fonction de dépollution.

Par exemple, l'unité envoie un signal à l'ordinateur de bord (OBD - On Board Diagnostic) en lui signalant cette anomalie, ce qui peut générer une mise en action d'un voyant lumineux d'alerte ou une demande d'intervention par un spécialiste.

En conséquence, il peut être noté que la prise en considération de la perturbation de la sonde par l'acide isocyanique (HNCO) et par le cyanure d'hydrogène (HCN) est donc utile pour le diagnostic de la fonction de traitement des NOx avec SCR.

Bien entendu la description ci-dessus du procédé peut être également appliquée à d'autres types de gaz d'échappement que ceux d'un moteur à combustion.

Elle peut s'appliquer notamment en relation avec les fumées provenant d'une combustion autre, comme par une turbine ou un four, et circulant dans une cheminée d'évacuation comportant un dispositif de traitement de NOx par SCR 10.

## Revendications

1. Procédé de détection d'émissions de composés azotés dans des gaz d'échappement traités avec une réduction catalytique sélective réalisée par l'introduction d'un agent réducteur dans les gaz et par passage de ces gaz au travers d'un catalyseur (16), **caractérisé en ce que** le procédé consiste à :

- envoyer à une unité de calcul (24) le signal collecté par un capteur de gaz (18) placé dans les gaz d'échappement en aval du catalyseur et représentatif de la quantité de NOx ($NOx_{sonde}$) en sortie du catalyseur,
- à décomposer ce signal en une valeur représentative de la quantité de NOx effectifs ($NOx_{réel}$) en sortie du catalyseur (16) établie par le modèle du catalyseur SCR, en un coefficient de perturbation (k) du capteur et en une valeur représentative de la quantité d'ammoniac ($NH_{3réel}$) via un modèle intégré pour obtenir $NOx_{sonde} = NOx_{réel} + k.NH_{3réel}$,
- à évaluer le coefficient (k) à partir de cette décomposition,
- à déterminer la présence de composés azotés en aval du catalyseur (16) lorsque le coefficient (k) est supérieur ou égal à 1.

2. Procédé selon la revendication 1, **caractérisé en ce qu'**il consiste à introduire de l'ammoniac ou une matière se décomposant en ammoniac en tant qu'agent réducteur.

3. Procédé selon la revendication 1 ou 2, **caractérisé en ce qu'**il consiste à introduire de l'urée en tant qu'agent réducteur.

4. Procédé selon l'une des revendications 1 à 3, **caractérisé en ce qu'**il consiste à détecter la présence d'acide isocyanique dans les gaz d'échappement en aval du catalyseur (16) lorsque le coefficient (k) est supérieur ou égal à 1 et lorsque l'agent réducteur est de l'ammoniac ou une matière se décomposant en ammoniac.

5. Procédé selon la revendication 1, **caractérisé en ce qu'**il consiste à introduire un hydrocarbure en tant qu'agent réducteur.

6. Procédé selon la revendication 5, **caractérisé en ce qu'**il consiste à introduire un hydrocarbure oxygéné en tant qu'agent réducteur.

7. Procédé selon la revendication 5 ou 6, **caractérisé en ce qu'**il consiste à introduire de l'éthanol en tant qu'agent réducteur.

8. Procédé selon l'une des revendications 1 et 5 à 7, **caractérisé en ce qu'**il consiste à détecter la présence d'acide isocyanique lorsque le est coefficient (k) est supérieur ou égal à 1 et lorsque l'agent réducteur est un hydrocarbure.

9. Procédé selon l'une des revendications précédentes, **caractérisé en ce qu'**il consiste à lancer par l'unité (24) une séquence d'alerte suite à la détection de ces composés azotés.

10. Utilisation du procédé selon l'une des revendications 1 à 9 pour les gaz d'échappement circulant dans la ligne d'échappement d'un moteur, notamment à combustion interne.

11. Utilisation du procédé selon l'une des revendications 1 à 9 pour les fumées provenant d'une combustion, notamment de turbine ou de four.


**Patentansprüche**

1. Verfahren zum Erfassen von Emissionen stickstoffhaltiger Verbindungen in Abgasen, die mit einer selektiven katalytischen Reduktion behandelt werden, die durch Einführen eines Reduktionsmittels in die Gase und durch Passage dieser Gase durch einen Katalysator (16) ausgeführt wird, **dadurch gekennzeichnet, dass** das Verfahren aus Folgendem besteht:

- Senden des Signals, das von einem Gassensor (18), der in den Abgasen stromabwärts des Katalysators platziert und für die Menge an NOx ($NOx_{sonde}$) am Ausgang des Katalysators repräsentativ ist, an eine Recheneinheit (24),
- Aufschlüsseln dieses Signals in einen Wert, der für die Menge an effektiven NOx ($NOx_{réel}$) am Ausgang des Katalysators (16) repräsentativ ist, der von dem Modell des SCR-Katalysators erstellt wird, in einen Störungskoeffizienten (k) des Sensors und in einen Wert, der für die Ammoniakmenge ($NH_{3réel}$) repräsentativ ist, über ein integriertes Modell, um $NOx_{sonde} = NOx_{réel} + k.NH_{3réel}$ zu erhalten,

- Bewerten des Koeffizienten (k) ausgehend von dieser Aufschlüsselung,
- Bestimmen der Gegenwart stickstoffhaltiger Verbindungen stromabwärts des Katalysators (16), wenn der Koeffizient (k) größer oder gleich 1 ist.

**2.** Verfahren nach Anspruch 1, **dadurch gekennzeichnet, dass** es darin besteht, Ammoniak oder einen Stoff, der in Ammoniak zerfällt, als Reduktionsmittel einzuführen.

**3.** Verfahren nach Anspruch 1 oder 2, **dadurch gekennzeichnet, dass** es darin besteht, Harnstoff als Reduktionsmittel einzuführen.

**4.** Verfahren nach einem der Ansprüche 1 bis 3, **dadurch gekennzeichnet, dass** es darin besteht, die Gegenwart von Isocyansäure in den Abgasen stromabwärts des Katalysators (16) zu erfassen, wenn der Koeffizient (k) größer oder gleich 1 ist, und wenn das Reduktionsmittel Ammoniak oder ein Stoff ist, der in Ammoniak zerfällt.

**5.** Verfahren nach Anspruch 1, **dadurch gekennzeichnet, dass** es darin besteht, einen Kohlenwasserstoff als Reduktionsmittel einzuführen.

**6.** Verfahren nach Anspruch 5, **dadurch gekennzeichnet, dass** es darin besteht, einen sauerstoffhaltigen Kohlenwasserstoff als Reduktionsmittel einzuführen.

**7.** Verfahren nach Anspruch 5 oder 6, **dadurch gekennzeichnet, dass** es darin besteht, Ethanol als Reduktionsmittel einzuführen.

**8.** Verfahren nach einem der Ansprüche 1 und 5 bis 7, **dadurch gekennzeichnet, dass** es darin besteht, die Gegenwart von Isocyansäure zu erfassen, wenn der Koeffizient (k) größer oder gleich 1 ist und wenn das Reduktionsmittel ein Kohlenwasserstoff ist.

**9.** Verfahren nach einem der vorhergehenden Ansprüche, **dadurch gekennzeichnet, dass** es darin besteht, durch die Einheit (24) eine Warnsequenz infolge des Erfassens dieser stickstoffhaltigen Verbindungen auszulösen.

**10.** Verwenden des Verfahrens nach einem der Ansprüche 1 bis 9 für die Abgase, die in dem Auspuffstrang eines Motors, insbesondere einer Brennstoffmaschine zirkulieren.

**11.** Verwenden des Verfahrens nach einem der Ansprüche 1 bis 9 für die Rauchgase, die aus einer Verbrennung stammen, insbesondere der einer Turbine oder eines Ofens.

**Claims**

**1.** A method of detecting nitrogen compound emissions in exhaust gases treated with selective catalytic reduction achieved by injecting a reducing agent into the gases and by passing these gases through a catalyst (16), **characterized in that** the method consists in:

- sending to a computing unit (24) the signal collected by a gas detector (18) arranged in the exhaust gas downstream from the catalyst and representative of the amount of NOx ($NOx_{sonde}$) at the catalyst outlet,
- decomposing this signal into a value representative of the effective NOx amount ($NOx_{réel}$) at the outlet of catalyst (16) established by the SCR catalyst model, into a detector perturbation coefficient (k) and into a value representative of the ammonia amount ($NH_{3réel}$) via an integrated model so as to obtain $NOx_{sonde} = Nox_{réel} + k.NH_{3réel}$,
- evaluating coefficient (k) from this decomposition,
- determining the presence of nitrogen compounds downstream from catalyst (16) when coefficient (k) is greater than or equal to 1.

**2.** A method as claimed in claim 1, **characterized in that** it consists in introducing ammonia or a material that decomposes to ammonia as the reducing agent.

**3.** A method as claimed in claim 1 or 2, **characterized in that** it consists in introducing urea as the reducing agent.

4.  A method as claimed in any one of claims 1 to 3, **characterized in that** it consists in detecting the presence of isocyanic acid in the exhaust gas downstream from catalyst (16) when coefficient (k) is greater than or equal to 1 and when the reducing agent is ammonia or a material decomposing to ammonia.

5.  A method as claimed in claim 1, **characterized in that** it consists in introducing a hydrocarbon as the reducing agent.

6.  A method as claimed in claim 5, **characterized in that** it consists in introducing an oxygenated hydrocarbon as the reducing agent.

7.  A method as claimed in claim 5 or 6, **characterized in that** it consists in introducing ethanol as the reducing agent.

8.  A method as claimed in any one of claims 1 and 5 to 7, **characterized in that** it consists in detecting the presence of isocyanic acid when coefficient (k) is greater than or equal to 1 and when the reducing agent is a hydrocarbon.

9.  A method as claimed in any one of the previous claims, **characterized in that** it consists in launching an alert sequence by unit (24) after detection of these nitrogen compounds.

10. Use of the method as claimed in any one of claims 1 to 9 for exhaust gases circulating in the exhaust line of an engine, notably an internal-combustion engine.

11. Use of the method as claimed in any one of claims 1 to 9 for fumes resulting from a combustion, notably in a turbine or an oven.

Figure unique

**EP 2 687 698 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2009135016 A2